# EUROPEAN PATENT APPLICATION

(11) **EP 2 120 415 A1**
(43) Date of publication of application: **18.11.2009**
(21) Application number: 08008927.9
(22) Date of filing: 14.05.2008
(51) Int. Cl.: H04L 29/06, G06F 21/00

(54) **Security system and method for a remote device in a wireless wide area network**

(71) Applicant: Dialogue Technology Corp., Taipei County 23146 (CN); LEE, Shang-Li, Shindian City, Taipei County 23146 Taiwan (CN)
(72) Inventor: Lee, Shang-Li, Shindian City Taipei County 23146 (TW)
(74) Representative: Becker Kurig Straus

(57) **Abstract**

The present invention provides a security system and method for a remote device (2) in a wireless wide area network which particularly provides a remote use authority according to a system unique code (210) and a network identification code (200). The present invention is characterized in that, when the remote processing device is connected to a network server (1), a network connecting module (20) and a basic input output module (21) of a remote processing device produce the network identification code and the system unique code, which the network server receives, and after verifying the network identification code and the system unique code, then a use authority is produced and transmitted back to a control module (22) of the remote processing device, thereby controlling authority management when the operating system (231) within storage module (23) is executing application programs.

## Description

### BACKGROUND OF THE INVENTION

### (a) Field of the Invention

The present invention relates to a security system and method for a remote device in a wireless wide area network, and more particularly to a security system and method for a remote device in a wireless wide area network, which, when connecting to a network, requires that a system unique code 210 of a hardware device, as well as a network identification code 200 of a network connecting module 20 be simultaneously verified, and which, moreover, provides a remote use authority according to the system unique code 210 and the network identification code 200.

### (b) Description of the Prior Art

The continuous development in network technology, and the universality of remote devices (such as computers, mobile phones, PDAs (Personal Digital Assistants), and the like, able to access the network), have already made connecting to a network, from the common receiving and sending of emails, webpage browsing and data searching to on-line shopping, network banking, on-line gaming, on-line investment, and so on, one of the essential daily activities of many people,. Moreover, many former financial spending activities can now be implemented via the network.

Hence, information system security between the remote devices and servers is becoming increasingly more important. Information system security is primarily aimed at achieving confidentiality of information and service thereof, and most importantly, validity, as well as transaction availability for use under conditions of legitimate authorization. However, because of insecure information management, there is the possibility of different degrees of risk resulting.

The following shortcomings still exist in current information security systems and are in need of improvement:
1. Relying on an inherent authentication procedure of the remote devices themselves to effect information security, making it difficult to achieve comprehensive and dynamic authentication and authorization management of legitimate remote devices and legitimate users. The majority of remote devices themselves use passive administrative means, such as file encryption, and the like, to effect information security, or, when the remote device is starting up, restricts use authority of the user logging in by system rules. However, such methods can be easily hacked by merely modifying the starting up procedure or revising the operating system, and thus unable to effectively achieve active and dynamic protection.
2. Unable to achieve control of local data access between the server and the remote devices using comprehensive and dynamic means. After the server is connected to the remote devices, the information security portion is mainly limited to the server itself, and is only able to rely on logging in methods such as a standard account number, password, fingerprint and so on, to control the remote devices. Hence, during information transmission between the remote devices and the server, the remote devices are still open to being embedded with a Trojan horse computer program, and the like, thereby enabling the stealing or damage of important data within the remote devices and the server.
3. Unable to effect on-line control of use authority of the remote devices. When the remote devices are logging onto the server, identity must be authenticated, however, only an account number/password, and the like, are used to effect such identity authentication, hence, should the account number/password be stolen, then any and possibly non-legitimate remote device can connect to the server, and once the legitimate user knows that his account number/password has been stolen, then the loss has already occurred.

### SUMMARY OF THE INVENTION

In light of the shortcomings of the aforementioned prior art structure, the inventor of the present invention, having accumulated years of experience in related arts, has meticulously carried out extensive study and exploration to ultimately design a new improved security system and method for a remote device in a wireless wide area network.

A primary objective of the present invention is to provide a security system and method for a remote device in a wireless wide area network, which, when connecting to a network, requires that a system unique code and a network identification code be simultaneously verified, and which, moreover, produces a corresponding remote use authority.

In order to achieve the aforementioned objective, the wireless wide area network security system of the present invention comprises a network server, a remote processing device able to connect to the network server, wherein the remote processing device is configured with at least a network connecting module able to transmit a network identification code to the network server; a basic input output module electrically connected to the network connecting module and able to transmit a system unique code to the network server; a control module able to open use authority according to the network identification code and the system unique code; and a storage module which executes an operation system according to the use authority.

In order to achieve the aforementioned objectives, the security system and method for a remote device in a wireless wide area network of the present invention is implemented according to the following steps:
First step: Actuation, whereby the basic input output module of the remote processing device actuates the network connecting module, producing the system unique code and the network identification code;
Second step: Connection, whereby the network connecting module connects to the server, and sequentially transmits the system unique code and the network identification code.
Third step: Authentication of the network and the hardware, whereby the network server receives and authenticates the network identification code and the system unique code transmitted by the network connecting module.
Fourth step: Authentication of user, whereby the network server dynamically confirms the legitimate identity of the user using prestored or other related legitimate user data by on-line interactive means.
Fifth step: Production of a use authority, whereby the network server authenticates the network identification code and the system unique code and produces a corresponding use authority which is transmitted back to a control module.
Sixth step: Completing the use authority for starting up, whereby the operating system of the remote processing device completes the starting up operation, and limits functional use of the local terminal according to the use authority.

To enable a further understanding of said objectives and the technological methods of the invention herein, a brief description of the drawings is provided below followed by a detailed description of the preferred embodiments.

### BRIEF DESCRIPTION OF THE DRAWINGS

FIG. 1 shows a block diagram of a preferred embodiment of the present invention.
FIG. 2 shows a flow chart of the preferred embodiment of the present invention.
FIG. 3 shows a block diagram of another preferred embodiment of the present invention.
FIG. 4 shows a block diagram of yet another preferred embodiment of the present invention.

### DETAILED DESCRIPTION OF THE PREFERRED EMBODIMENTS

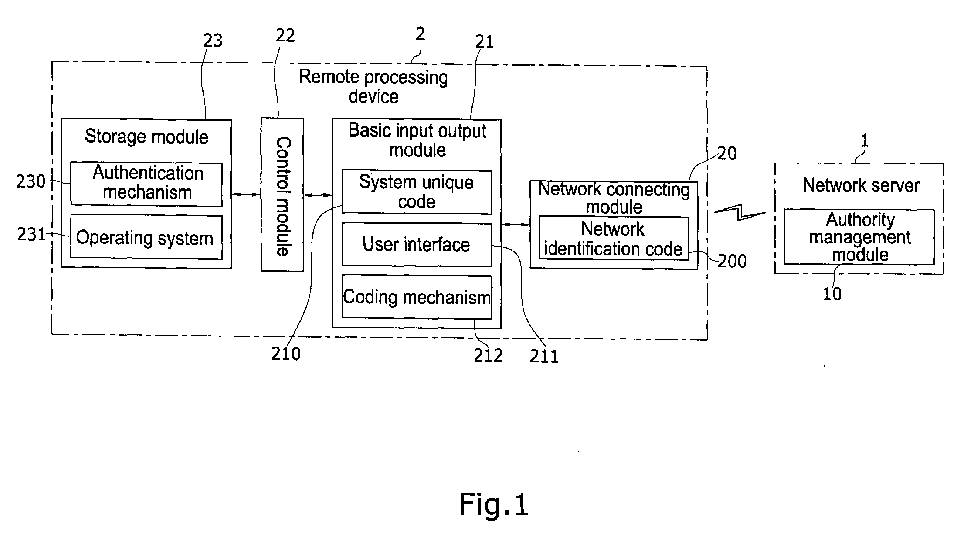

Referring to FIG. 1, which shows a block diagram of a preferred embodiment of the present invention, wherein a wireless wide area network security system comprises one or more than one network server 1 and one remote processing device 2 that is able to connect to the network server 1; in which:

The network server 1 is internally provided with an authority management module 10, and the authority management module 10 produces and transmits back a use authority according to a network identification code 200 and a system unique code 210.

The remote processing device 2 comprises a sequentially connected network connecting module 20, a basic input output module 21, a control module 22 and a storage module 23; in which:

The network connecting module 20 is configured with the network identification code 200, and when the network connecting module 20 is a mobile communications device, a network card or a wireless base station, then the network identification code 200 is an IMEI code (International Mobile Equipment Identity code), a network card address number or a device address number respectively.

The basic input output module 21 is configured with the system unique code 210, a user interface 211 able to manage the system unique code 210 and the network identification code 200, as well as a coding mechanism 212 which enables the user interface 211 to select secure mode. Furthermore, the system unique code 210 can be a central processor number, a chipset number or a hardware device number of the remote processing device 2.

The control module 22 confirms validity of the remote processing device 2 according to the network identification code 200 and the system unique code 210, and implements authentication of the identity of the user. Moreover, the control module 22 can be either a hardware form of an integrated circuit, or programmed into an integrated circuit, in the form of a firmware in flash memory or in the form of software installed on a hard disk.

The storage module 23 is internally provided with an authentication mechanism 230, and the authentication mechanism 230 implements dynamic and on-line interactive communication with the network server to confirm the validity of the identity of the user and set a use authority, as well as executing an operating system 231 according to the set a use authority.

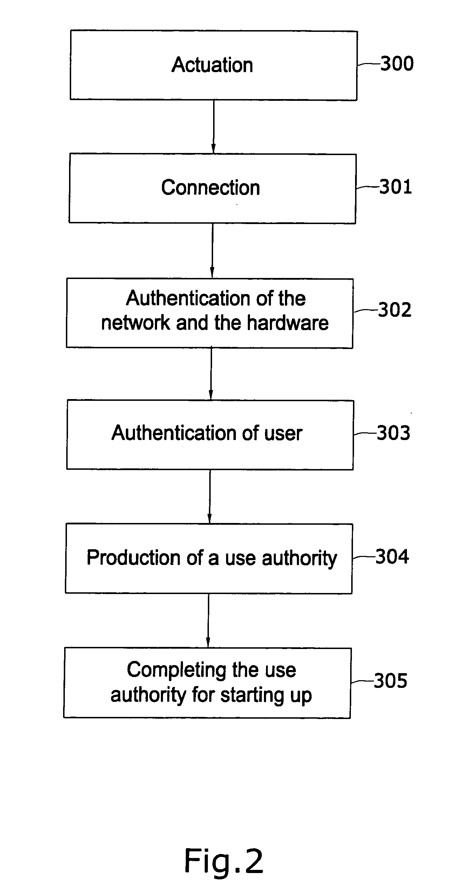

Referring to FIGS. 1 and 2, which show the block diagram and a flow chart of the preferred embodiment respectively of the present invention, wherein a security method for a remote device in a wireless wide area network is implemented according to the following steps:

First step: Actuation 300, whereby the basic input output module 21 of the remote processing device 2 actuates the network connecting module 20, producing the system unique code 210 and the network identification code 200.

Second step: Connection 301, whereby the network connecting module 20 connects to the network server 1, and sequentially transmits the system unique code 210 and the network identification code 200.

Third step: Authentication of the network and the hardware 302, whereby the network server 1 receives and authenticates the network identification code 200 and the system unique code 210 transmitted by the network connecting module 20.

Fourth step: Authentication of user 303, whereby the network server 1 dynamically confirms the legitimate identity of the user using prestored or other related legitimate user data by on-line interactive means.

Fifth step: Production of a use authority 304, whereby the network server 1 authenticates the network identification code 200 and the system unique code 210 and produces a corresponding use authority which is transmitted back to the control module 22.

Sixth step: Completing the use authority for starting up 305, whereby the operating system of the remote processing device 2 completes the starting up operation, and limits functional use of the local terminal according to the use authority.

When implementing the aforementioned steps, after starting up the remote processing device 2, then the network connecting module 20 actuates the basic input output module 21, whereupon the network connecting module 20 produces the network identification code 200 and the basic input output module 21 produces the system unique code 210. The network identification code 200 and the system unique code 210 are then transmitted to the network server 1, and the authority management module 10 of the network server 1 confirms validity of the remote processing device 2 according to the network identification code 200, the system unique code 210 and the user identification code, and also implements authentication of the identity of the user. A use authority is produced after confirming user validity, and is transmitted back to the control module 22 of the remote processing device 2, at which time, only after authenticating validity is the system soft hardware and the operating system actuated to enable follow-up operations, which is continued by completing the starting up operation of the operating system 231 within the storage module 23 of the remote processing device 2. When the user wants to execute application programs using the operating system 231, then the control module 22 controls use rights of the operating system 231 according to a use authority.

Furthermore, apart from the aforementioned steps having primary functionality when implementing starting up the remote processing device 2, moreover, after starting up of the remote processing device 2 has completed and before connecting to the network, or before the operating system 231 executes connection to the network, when executing the aforementioned steps, before the remote processing device 2 has connected to the network server 1, so long as the remote processing device 2 has implemented a connecting operation with the network server 1, then the security method for a remote device in a wireless wide area network of the present invention is immediately implemented.

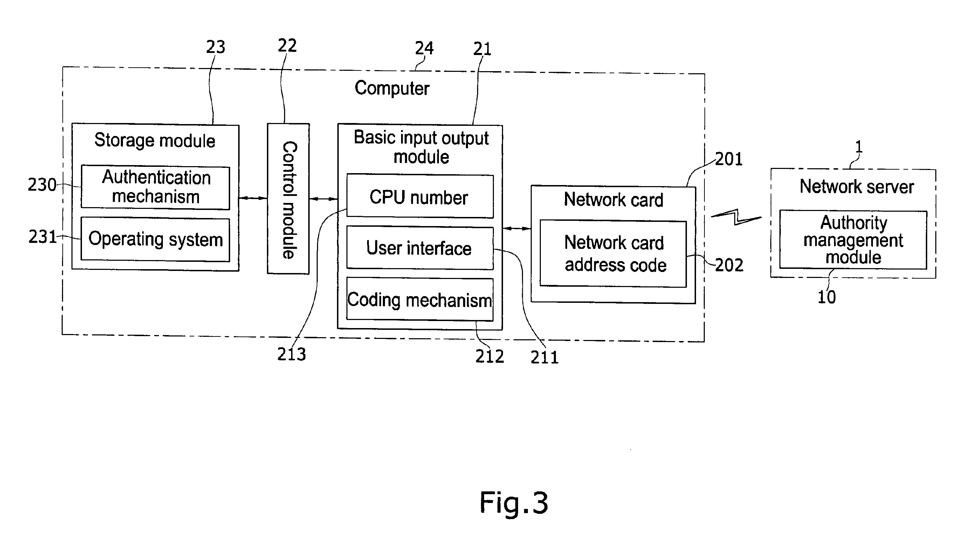

Referring to FIGS. 1 and 3, which show the block diagram of the preferred embodiment and a block diagram of another preferred embodiment respectively of the present invention, wherein the remote processing device 2 in the other embodiment can be a computer 24, and the network connecting module 20 and the network identification code 200 are a network card 201 and a network card address number 202 respectively; and the system unique code 210 is a CPU number 213.

In conjunction with the aforementioned steps of FIG. 2, after starting up the computer 24, then the network card 201 and the basic input output module 21 are actuated, whereupon the network card 201 produces the network card address number 202, and the basic input output module 21 produces the CPU number 213. The network card address number 202 and the CPU number 213 are transmitted to the network server 1, and the authority management module 10 of the network server 1 produces a use authority according to the network card address number 202 and the CPU number 213; and which is transmitted back to the computer 24 and to the control module 22, at which time, the operating system 231 within the storage module 23 of the computer 24 completes the starting up operation. When the user wants to execute application programs using the operating system 231, then the control module 22 controls use rights of the operating system 231 according to a use authority.

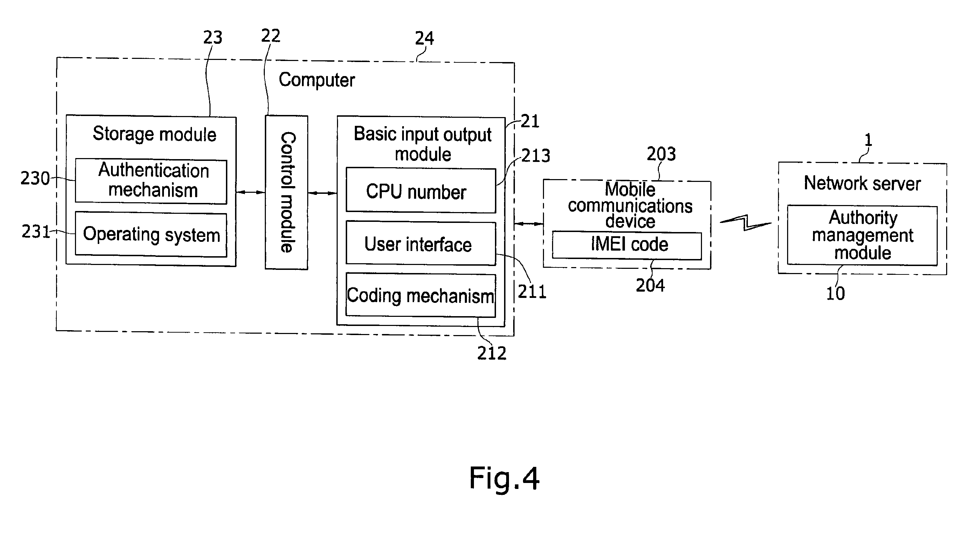

Referring to FIGS. 1 and 4, which show the block diagram of the preferred embodiment and a block diagram of yet another preferred embodiment respectively of the present invention, wherein the remote processing device 2 in the yet another embodiment is the computer 24, and the network connecting module 20 and the network identification code 200 are a mobile communications device 203 and an IMEI code 204 respectively; and the system unique code 210 is the CPU number 213.

In conjunction with the aforementioned steps of FIG. 2, after starting up the computer 24, then the mobile communications device 203 and the basic input output module 21 are actuated, whereupon the mobile communications device 203 produces the IMEI code 204, and the basic input output module 21 produces the CPU number 213. The IMEI code 204 and the CPU number 213 are transmitted to the network server 1, and the authority management module 10 of the network server 1 produces a use authority according to the IMEI code 204 and the CPU number 213, and which is transmitted back to the computer 24 and transmitted to the control module 22, at which time, the operating system 231 within the storage module 23 of the computer 24 completes the starting up operation. When the user wants to execute application programs using the operating system 231, then the control module 22 controls use rights of the operating system 231 according to a use authority.

Accordingly, characteristics of the present invention which improve upon the prior art are as follows:
1. Uses an authentication procedure of the remote processing device 2 itself to effect information security. During the starting up process or execution of application programs of the remote processing device 2, apart from using software to implement information security, the control module 22 can also be simultaneously used to implement combinative control. Moreover, because the control module 22 is either a hardware or firmware form, thus, the execution of application programs cannot be used to break into the system, and the hardware or firmware form better prevents the control module 22 from being tampered with or altered.
2. Uses the network server 1 to effect control of local data access to the remote processing device 2. After the remote processing device 2 has connected to the network server 1, apart from being able to limit a use authority of the remote processing device 2 within the network server 1, the network server 1 can also simultaneously control the remote processing device 2, and implement a use authority management of any operation within the remote processing device 2, thereby providing the present invention with the advantages to achieve preventing damage to the system by unauthorized users and tampering with data within the remote processing device 2.
3. Able to effect on-line control of a use authority of the remote processing device 2, in which, apart from the general user inputting an account number/password when logging in, the on-line control of a use authority further aims at the remote processing device 2 itself implementing hardware identification to implement data security thereof using recognition of the network identification code 200 and the system unique code 210. Even when a legitimate user is using an unauthorized remote processing device, or is using a remote processing device he is not entitled to use, then such a remote processing device will be unable to start and unable to communicate with the network server 1.

In conclusion, the security system and method for a remote device in a wireless wide area network of the present invention is provided with patent novelty and high industrial utility value, accordingly, the inventor of the present invention hereby proposes an application for a new patent as disclosed herein.

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A security system for a remote device in a wireless wide area network, comprising one or more than one network server 1 and one remote processing device 2 that is able to connect to the network server 1, the remote processing device 2 is configured with:
a network connecting module 20 configured with a network identification code 200 which is transmitted to the network server 1 for authentication;
a basic input output module 21 electrically connected to the network connecting module 20, and the basic input output module 21 is configured with a system unique code 210 which is transmitted to the network server 1 for authentication;
a control module 22 electrically connected to the basic input output module 21, and the control module 22 confirms validity of the remote processing device 2 according to the network identification code 200 and the system unique code 210, and implements authentication of the identity of the user;
a storage module 23 electrically connected to the control module 22 and internally provided with an authentication mechanism 230, the authentication mechanism 230 confirms the identity of the user using dynamic and on-line interactive means, and produces an identification code corresponding to the user provided with a use authority.

2. The security system for a remote device in a wireless wide area network according to claim 1, wherein the system unique code 210 is a hardware unique code or a software unique code.

3. The security system for a remote device in a wireless wide area network according to claim 2, wherein the hardware unique code is either a central processor number, a chipset number or a hardware device number of the remote processing device 2.

4. The security system for a remote device in a wireless wide area network according to claim 2, wherein the software unique code is a software login code for legitimate use of the operating system.

5. The security system for a remote device in a wireless wide area network according to claim 1, wherein the authentication mechanism 230 is further set with a use authority of the user identification code.

6. The security system for a remote device in a wireless wide area network according to claim 5, wherein the storage module 23 is configured with an operating system 231, and the operating system 231 provides corresponding operational use according to the user identification code.

7. The security system for a remote device in a wireless wide area network according to claim 1, wherein the network server 1 is internally provided with an authority management module 10 able to verify the network identification code 200, the system unique code 210 and the user identification code.

8. The security system for a remote device in a wireless wide area network according to claim 2, wherein the authority management module 10 produces a use authority according to the network identification code 200, the system unique code 210 and the user identification code, and which is transmitted back to the control module 22.

9. The security system for a remote device in a wireless wide area network according to claim 1, wherein the basic input output module 21 is configured with a user interface 211 able to manage the network identification code 200, the system unique code 210 and the control module 22, as well as a coding mechanism 212 enabling the user interface 211 to implement dynamic interactive communication with the network server 1 to determine security mode.

10. The security system for a remote device in a wireless wide area network according to claim 1, wherein the control module 22 is either a hardware form of an integrated circuit, or programmed into an integrated circuit, in the form of a firmware in flash memory or in the form of software installed on a hard disk.

11. The security system for a remote device in a wireless wide area network according to claim 1, wherein the network connecting module 20 is a mobile communications device 203, and the network identification code 200 is an IMEI code (International Mobile Equipment Identity Code) 204.

12. The security system for a remote device in a wireless wide area network according to claim 1, wherein the network connecting module 20 is a network card, and the network identification code 200 is a network card address number 202.

13. The security system for a remote device in a wireless wide area network according to claim 1, wherein the network connecting module 20 is a wireless base station, and the network identification code 200 is a device address number.

14. A security method for a remote device in a wireless wide area network, implemented according to the following steps:
First step: Actuation 300, whereby a basic input output module 21 of a remote processing device 2 actuates a network connecting module 20, producing a system unique code 210 and a network identification code 200;
Second step: Connection 301, whereby a network connecting module 20 connects to a network server 1 and sequentially transmits the system unique code 210 and the network identification code 200;
Third step: Authentication of the network and the system 302, whereby the network server 1 receives and authenticates the network identification code 200 and the system unique code 210 transmitted by the network connecting module 20;
Fourth step: Authentication of user 303, whereby the network server 1 dynamically confirms the legitimate identity of the user using prestored or other related legitimate user data by on-line interactive means;
Fifth step: Production of a use authority 304, whereby the network server 1 authenticates the network identification code 200 and the system unique code 210 and produces a corresponding use authority which is transmitted back to a control module 22;
Sixth step: Completing the use authority for starting up 305, whereby an operating system 231 of the remote processing device 2 completes the starting up operation, and limits functional use of the local terminal according to the use authority.

15. The security method for a remote device in a wireless wide area network according to claim 14, wherein the system unique code 210 is stored in the basic input output module 21, and the network identification code 200 is stored in the network connecting module 20.

16. The security method for a remote device in a wireless wide area network according to claim 14, wherein the network server 1 is internally provided with an authority management module 10 able to verify the network identification code 210, a hardware unique code and a user identification code.

17. The security method for a remote device in a wireless wide area network according to claim 16, wherein the authority management module 10 produces a use authority according to the network identification code 200, the system unique code 210 and the user identification code, and which is transmitted back to the control module 22.
